# EUROPÄISCHE PATENTSCHRIFT

(11) **EP 1 212 239 B1**
(45) Veröffentlichungstag und Bekanntmachung des Hinweises auf die Patenterteilung: **02.04.2003**
(21) Anmeldenummer: 00967649.5
(22) Anmeldetag: 06.09.2000
(51) Int. Cl.: B64D 11/06, A47C 7/62

(54) **FLUGGASTSITZ MIT INTEGRIERTER SCHWIMMWESTE**
PLANE PASSENGER SEAT WITH INTEGRATED LIFE VEST
SIEGE DE VOL PASSAGER AVEC GILET DE SAUVETAGE INTEGRE

(30) Priorität: 17.09.1999 DE 19944619
(43) Veröffentlichungstag der Anmeldung: 12.06.2002
(73) Patentinhaber: Recaro Aircraft Seating GmbH & Co., 74523 Schwäbisch Hall (DE)
(72) Erfinder: SALZER, Uwe, 88682 Salem (DE)
(74) Vertreter: Bartels, Martin Erich Arthur
(86) Internationale Anmeldenummer: EP0008684
(87) Internationale Veröffentlichungsnummer: WO01021485

(56) Entgegenhaltungen:
- GB-A- 2 026 853
- US-A- 3 167 794
- US-A- 3 623 683
- US-A- 3 903 554
- US-A- 4 619 623
- US-A- 4 819 987
- US-A- 5 335 882
- US-A- 5 342 109

## Beschreibung

Die Erfindung betrifft einen Fluggastsitz mit den Merkmalen des Oberbegriffes des Patentanspruches 1.

Dahingehende Fluggastsitze sind in der allgemeinen und in der sonstigen Zivilluftfahrt in einer Vielzahl von Ausführungsformen bekannt. Bei den bekannten Fluggastsitzen ist die als Rettungsmittel bei einer Notwasserung dienende Schwimmweste in der Regel in einem Schwimmwestenbehälter unter dem Armlehnenkasten angeordnet oder in einer Schwimmwestentasche unter dem Sitzboden des Fluggastsitzes (US-A-3 623 683), wobei die Schwimmweste in der Art eines Kissens zusammengefaltet von der dahingehenden Schwimmwestentasche aufgenommen ist.

Im Hinblick auf die genannten Unterbringungsmöglichkeiten bei den bekannten Fluggastsitzen ist die Schwimmweste teilweise nur schwer greifbar, was in Notsituationen nachteilig ist. Auch sind im Notfall Irrtümer nicht ausgeschlossen, für welchen Sitzbenutzer die Schwimmweste nun tatsächlich vorgesehen ist. Da die in Einsatz befindlichen Rettungssysteme in Form der Schwimmwesten mit Ablaufdaten für eine Überprüfung oder Erneuerung versehen sind, sind die dahingehenden Wartungsarbeiten für das Überprüfungspersonal im Hinblick auf die "versteckte" Anordnung der Schwimmwesten nur umständlich möglich. Des weiteren erhöhen die separat angeordneten Schwimmwesten das Abfluggewicht der Maschine, was die zu transportierenden, gewinnbringenden Nutzlasten verringert.

So beschreibt das US-A-4 619 623 einen Fluggastsitz mit einer in einem kastenartigen Hohlraum in der Rückenlehne des Sitzes befindlichen Unterbringungsmöglichkeit für eine Schwimmweste, deren Entnahme aus dem Hohlraum nach Öffnen einer durch Haftverschlußbänder verschlossenen Abdeckung am oberen Ende der Rückenlehne erfolgt. Zur Entnahme ist es erforderlich, daß der Sitzbenutzer seinen Sitzplatz zumindest vorübergehend verläßt, was notwendigerweise auch mit einem Öffnen des Sicherheitsgurtes verbunden und mithin unter Sichersheitsaspekten von Nachteil ist. Zur besseren Erkennbarkeit und Handhabbarkeit der Abdeckung der Entnahmeöffnung ist diese mit einer Zuglasche versehen, die jedoch nicht im unmittelbaren Blickfeld des Sitzbenutzers, sondern vielmehr im Blickfeld des jeweiligen hinteren Sitznachbarn sich befindet, so daß gegebenenfalls Unklarheit darüber besteht, welche Schwimmweste welchem Sitzbenutzer zuzuordnen ist. Letzteres beinhaltet die Gefahr von Verwechslungen, die im Ernstfall eine Bewältigung von Gefahrensituationen deutlich erschweren kann.

Auch die in der GB-A-2 026 853 offenbarte Lösung eines Sitzes, vorzugsweise eingesetzt in Wasserfahrzeugen, mit einer Schwimmweste, die integraler Bestandteil der Polsterung des Sitzteiles und eines Teils der Rückenfläche ist, vermeidet nicht die Notwendigkeit für den Sitzbenutzer, im Bedarfsfall zur Entnahme der Schwimmweste aus diesem Sitz denselbigen vorübergehend zu verlassen, was mit den genannten Sicherheitsrisiken einhergeht.

Durch das US-A-5 342 109 ist ein gattungsgemäßer Fluggastsitz bekannt, bei dem die Schwimmweste selbst ein Polsterteil für die Rückenlehne ausbildet und als integraler Bestandteil der Rückenlehne aus einer entsprechenden Ausnehmung entnehmbar ist. Auch in diesem Fall muß der Sitzbenutzer den Fluggastsitz wiederum verlassen, um die ihm zugewandte Schwimmweste aus der Rückenlehne entnehmen zu können. Sofern die Schwimmweste von den sonstigen Polsterteilen der Rückenlehne aufgenommen ist, wird diese von einer hochklappbaren Stoffbezugsbahn überdeckt, die über Haftverschlußbänder an den sonstigen Bezugsteilen der Rückenlehne festlegbar ist. Die bekannte Schwimmweste ist in der Art eines Auftriebskörpers aus Feststoffen ausgebildet und das Einsatzgewicht der Schwimmweste ist mithin entsprechend groß.

Ausgehend von diesem Stand der Technik liegt der Erfindung die Aufgabe zugrunde, die Fluggastsitze der vorstehend genannten Art derart weiter zu verbessern, daß die Schwimmwesten leichter zugänglich sind, daß Irrtümer über ihren Gebrauch vermieden sind und daß eine Gewichtsverringerung erreicht ist. Eine dahingehende Aufgabe löst ein Fluggastsitz mit den Merkmalen des Patentanspruches 1 in seiner Gesamtheit.

Dadurch, daß gemäß dem kennzeichnenden Teil des Patentanspruches 1 die Schwimmweste in das Polsterteil der Beinauflage integriert ist und daß die Schwimmweste in der Art eines Kissens zusammengelegt von der Ausnehmung des jeweiligen Polsterteils aufgenommen ist, ist die in Rede stehende Polsterung durch die zusammengelegte Schwimmweste ersetzt, so daß gegenüber den bekannten Lösungen eine Gewichtsreduzierung erreicht ist, was gegebenenfalls erhöhte Nutzlasten zuläßt.

Da die Schwimmweste als integraler Bestandteil in der Beinauflage aufgenommen ist, ist die unmittelbare Zugänglichkeit der Schwimmweste für den Sitzbenutzer im Notfall gewährleistet und der Sitzbenutzer kann ohne Beeinträchtigung seiner Nachbarn durch einfaches Spreizen seiner Beine die Schwimmweste unmittelbar entnehmen, ohne hierfür den Sitz verlassen zu müssen. Ferner ist es dem jeweiligen Passagier schnell und ohne Irrtümer möglich, seine für ihn vorgesehene Schwimmweste im Notfall zu benutzen. Im Hinblick auf die gute Zugänglichkeit der Schwimmweste tut sich auch das Überprüfungspersonal leicht in Bezug auf die Überprüfung der jeweiligen Schwimmweste. Die erfindungsgemäße Lösung ist auch insofern vorteilhaft, als bei Flugzeugen mit sehr engen Kabinenplatzverhältnissen ein jeder Fluggastsitz mit einer Schwimmweste ausrüstbar ist, die ansonsten keinen Platz gefunden hätte und gegebenenfalls an einer anderen dann schwer erreichbaren Stelle zentral bevorratet wird. Letzteres kommt insbesondere im Bereich der Sportfliegerei vor.

Bei einer bevorzugten Ausführungsform des erfindungsgemäßen Fluggastsitzes ist die Schwimmweste in eine Ausnehmung des Polsterteiles einsetzbar und von einer Abdeckung als Bestandteil des Polsterteiles abdeckbar oder abdeckungsfrei in dem Polsterteil aufgenommen. Die Abdeckung kann einen bündigen Abschluß mit den sonstigen Teilen des angesprochenen Polsterteiles gewährleisten und dient mithin der Erhöhung des Sitzkomforts. Des weiteren schützt eine dahingehende Abdeckung die Schwimmweste vor Beschädigungen, so daß diese gegebenenfalls auch ohne weitere Schutzhülle in das Polsterteil einsetzbar ist. Insbesondere bei einer abdekkungsfreien Lösung gewährleistet die Schwimmweste aufgrund ihrer Nachgiebigkeit zumindest teilweise die Polstereigenschaft des sie aufnehmenden Polsterteiles, so daß ein angemessener Sitzkomfort erreicht ist.

Aus Platzersparnisgründen ist vorzugsweise die Schwimmweste in der Art eines Kissens zusammengelegt allein oder zusammen mit ihrer Schutzhülle von der Ausnehmung des Polsterteiles aufnehmbar, die hierfür im wesentlichen rechteckförmig ausgebildet paßgenau die Schwimmweste aufnimmt.

Bei einer weiteren bevorzugten Ausführungsform des erfindungsgemäßen Fluggastsitzes ist die Abdeckung des Polsterteiles mit einer Zuglasche zum Öffnen versehen, wobei die Abdeckung derart schwenkbar mit dem sonstigen Polsterteil verbunden ist, daß nach dem Öffnen die Schwimmweste dem Sitzbenutzer zugewandt für seinen Zugriff unmittelbar freiliegt. Der Sitzbenutzer schwenkt also die Abdeckung von sich weg und ist im Zugriffsbereich für die Schwimmweste durch die Abdeckung nicht behindert.

Sofern die Schwimmweste Teil der Beinauflage ist, ist sie unter Umständen auch dann rasch greifbar, wenn der Passagier durch das Gurtrückhaltesystem im Fluggastsitz entsprechend gehalten ist.

Bei einer weiteren bevorzugten Ausführungsform des erfindungsgemäßen Fluggastsitzes ist die Beinauflage durch ihre Polsterteile mindestens zweigeteilt, wobei die Schwimmweste entweder in dem Polsterteil angeordnet ist, das dem freien Ende der Beinauflage oder der Fußstütze des Sitzes zu- oder abgewandt ist.

Für eine verbesserte Identifizierung der Schwimmweste kann die Abdekkung zumindest teilweise durchsichtig ausgebildet oder mit einer Markierung versehen sein und für einen permanenten Einsatz ist die Abdeckung für die Schwimmweste wiederverschließbar, insbesondere über Haftbandverschlüsse, wie sie beispielsweise unter der Markenbezeichnung "Klettbänder" auf dem Markt angeboten werden.

Im folgenden wird der erfindungsgemäße Fluggastsitz anhand einer Ausführungsform näher erläutert. Es zeigen in prinzipieller und nicht maßstäblicher Darstellung die
- Fig. 1: eine perspektivische Ansicht auf zwei in Reihe nebeneinander angeordnete Fluggastsitze;
- Fig.2a und 2b: in perspektivischer Darstellung zwei verschiedene Ausführungsformen einer Beinauflage mit integrierter Schwimmweste für einen Fluggastsitz nach der Fig.1.

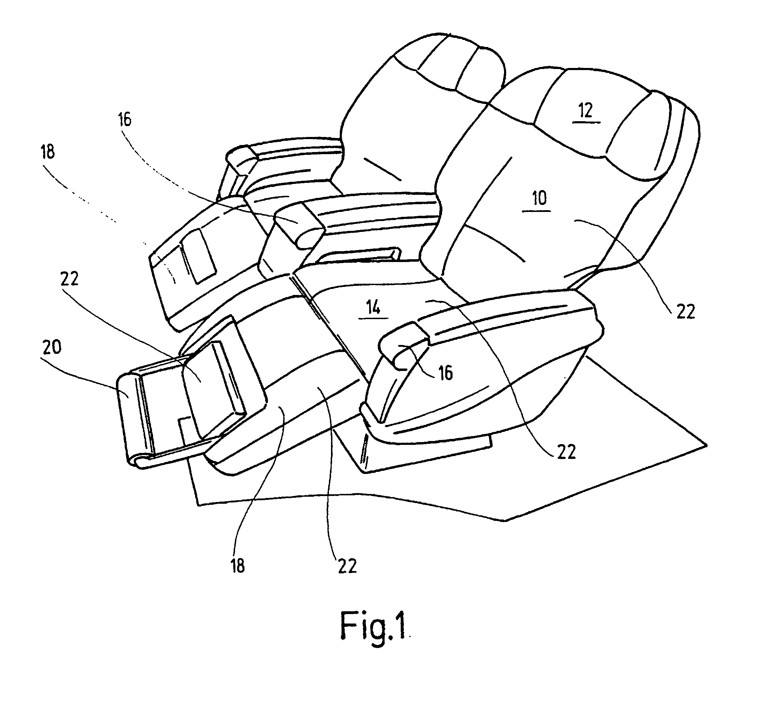

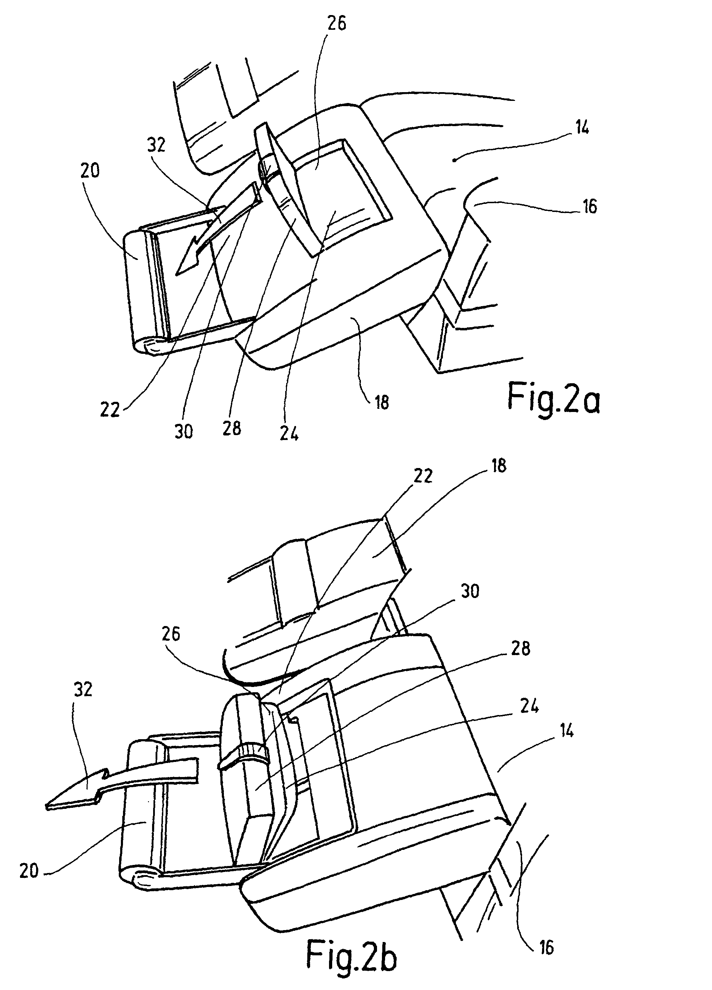

Ein Fluggastsitz nach der Darstellung in Fig.1 weist ein Rückenteil 10 mit integriertem Kopfstützteil 12 auf, hat ein Sitzteil 14 mit zwei Armauflagen 16 und verfügt darüber hinaus über eine schwenkbar angeordnete Beinauflage 18 mit in ihr ein- und ausklappbarer bügelartiger Fußstütze 20. Die angesprochenen Sitzkomponenten und Sitzteile sind mit den Sitzkomfort für den Passagier erhöhenden Polsterteilen 22 ausgestattet. Der Fluggastsitz weist eine an ihm angeordnete Unterbringungsmöglichkeit für eine Schwimmweste 24 auf, wobei die Unterbringungsmöglichkeit aus einem Polsterteil 22 der Beinauflage 18 gebildet ist. Wie insbesondere die Fig.2a und 2b zeigen, ist dabei die Schwimmweste 24 als integraler Bestandteil von dem jeweiligen Polsterteil 22 aufgenommen.

Die Ausführungsformen nach den Fig.2a und 2b werden mit denselben Bezugszeichen bezeichnet und die dahingehenden Ausführungen gelten für beide Varianten, die insofern erläutert werden, als sie sich voneinander wesentlich unterscheiden.
Die Schwimmweste 24 ist in eine Ausnehmung 26 des Polsterteiles 22 der Beinauflage 18 einsetzbar, wobei die dahingehende Ausnehmung 26 von einer deckelartigen Abdeckung 28 als Bestandteil des angesprochenen Polsterteiles 22 abdeckbar in diesem aufgenommen ist. Die Schwimmweste 24 garantiert dabei aufgrund ihrer Nachgiebigkeit die Polstereigenschaft des sie aufnehmenden Polsterteiles 22, an der dieses durch die Schwimmweste 24 ersetzt ist.

Die Schwimmweste 24 ist in der Art eines Kissens zusammengelegt und zusammen mit ihrer Schutzhülle paßgenau in der Ausnehmung 26 des Polsterteiles 22 aufgenommen, wobei die Ausnehmung 26 hierfür im wesentlichen rechteckförmig ausgebildet ist.

Wie insbesondere die Fig.2a und 2b zeigen, ist die jeweilige Abdeckung 28 des Polsterteiles 22 mit einer Zuglasche 30 zum Öffnen versehen, wobei die Öffnungsrichtung über die Zuglasche 30 in den Fig.2a und 2b mit einem Pfeil 32 wiedergegeben ist. Die Abdeckung 28 ist in Blickrichtung auf die Figuren gesehen entgegen dem Uhrzeigersinn derart schwenkbar mit dem sonstigen Polsterteil 22 der Beinauflage 18 verbunden, daß nach dem Öffnen die Schwimmweste 24 dem Sitzbenutzer unmittelbar zugewandt für seinen Zugriff freiliegt.

Bei einer nicht näher dargestellten Ausführungsform kann das Polsterteil 22 mit der integrierten Schwimmweste 24 Teil des Sitzteiles 14 oder des dahingehenden Sitzbodens sein. Bei der vorgestellten Lösung ist die Beinauflage 18 durch ihre angesprochenen Polsterteile 22 in Längsrichtung gesehen im wesentlichen zweigeteilt und die Schwimmweste 24 kann entweder in dem Polsterteil 22 angeordnet werden, das dem freien Ende der Beinauflage 18 oder der Fußstütze 20 des Sitzes zugewandt, (vergleiche Lösung gemäß Fig.2b) oder entsprechend abgewandt ist (vergleiche Lösung gemäß Fig.2a).

Bei einer nicht näher dargestellten Ausführungsform kann die Abdeckung 28 für eine verbesserte Identifizierung der Schwimmweste 24 zumindest teilweise durchsichtig oder markiert sein und die Abdeckung 28 für die Schwimmweste 24 ist vorzugsweise wiederverschließbar, beispielsweise in Form lösbarer Haftbandverschlüsse (nicht näher dargestellt).

Bei dem erfindungsgemäßen Fluggastsitz ist die Schwimmweste 24 durch Substitution eines Polsterteiles 22 in der Polsterung des Fluggastsitzes integrierbar und kann durch den Polsterteilbezug als Abdeckung 28 in ihrer Position innerhalb des Fluggastsitzes gehalten sein. Die Abdeckung 28 kann aber auch aus einem festen Deckelteil od. dgl. mit vorgebbarer Nachgiebigkeit gebildet sein. Die dahingehende Lösung eignet sich auch für Fluggastsitze, deren Ausstattung und Geometrie eine für den jeweiligen Sitz übliche Plazierung der Schwimmweste nicht zulassen würden. Mit der erfindungsgemäßen Lösung ist die Integrierung einer für Notfälle vorgesehenen Schwimmweste 24 in einen Fluggastsitz geschaffen, ohne daß es dabei zu Komforteinbußen oder einer Gewichtserhöhung kommen würde. Die Schwimmweste 24 ist schnell und eindeutig greifbar und kann ohne Irrtümer unmittelbar von dem Sitzbenutzer oder Passagier im Notfall eingesetzt werden. Ist die Schwimmweste 24 in der Beinauflage 18 integriert, kann sie der Sitzbenutzer ohne Beeinträchtigung seiner Nachbarn durch einfaches Spreizen seiner Beine unmittelbar entnehmen, so daß im Notfall eine rasche, sichere Entnahmemöglichkeit gegeben ist.

## Patentansprüche

1. Fluggastsitz mit einer an ihm angeordneten Unterbringungsmöglichkeit für eine Schwimmweste (24) und mit den Sitzkomfort erhöhenden Polsterteilen, wobei die Unterbringungsmöglichkeit aus mindestens einem Polsterteil (22) gebildet ist, sowie mit einer Beinauflage (18) mit einem Polsterteil (22), **dadurch gekennzeichnet, daß** die Schwimmweste (24) als integraler Bestandteil von einer Ausnehmung (26) des jeweiligen Polsterteils (22) aufgenommen ist, wobei die Schwimmweste (24) für den Sitzbenutzer zugänglich diesem zugewandt ist, daß die Schwimmweste (24) in das Posterteil (22) der Beinauflage (18) integriert ist und daß die Schwimmweste (24) in der Art eines Kissens zusammengelegt von der Ausnehmung (26) des jeweiligen Polsterteils (22) aufgenommen ist.

2. Fluggastsitz nach Anspruch 1, **dadurch gekennzeichnet, daß** die Schwimmweste (24) von einer Abdeckung (28) als Bestandteil des Polsterteils (22) abdeckbar oder abdeckungsfrei in dem Polsterteil (22) aufgenommen ist.

3. Fluggastsitz nach Anspruch 1 oder 2, **dadurch gekennzeichnet, daß** die Schwimmweste (24) aufgrund ihrer Nachgiebigkeit zumindest teilweise die Polstereigenschaft des sie aufnehmenden Polsterteils (22) gewährleistet.

4. Fluggastsitz nach Anspruch 2, **dadurch gekennzeichnet, daß** die Schwimmweste (24) allein oder zusammen mit ihrer Schutzhülle von der Ausnehmung (26) des Polsterteils (22) aufnehmbar ist, die hierfür im wesentlichen rechteckförmig ausgebildet paßgenau die Schwimmweste (24) aufnimmt.

5. Fluggastsitz nach einem der Ansprüche 2 bis 4, **dadurch gekennzeichnet, daß** die Abdeckung (28) des Polsterteils (22) mit einer Zuglasche (30) zum Öffnen versehen ist, und daß die Abdeckung (28) schwenkbar mit dem sonstigen Polsterteil (22) verbunden ist.

6. Fluggastsitz nach Anspruch 5, **dadurch gekennzeichnet, daß** die Beinauflage (18) durch ihre Polsterteile (22) mindestens zweigeteilt ist und die Schwimmweste (24) in dem Polsterteil (22) angeordnet ist, das dem freien Ende der Beinauflage (18) des Sitzes zugewandt oder abgewandt ist.

7. Fluggastsitz nach einem der Ansprüche 2 bis 6, **dadurch gekennzeichnet, daß** die Abdeckung (28) für eine verbesserte Identifizierung der Schwimmweste (24) zumindest teilweise durchsichtig ausgebildet oder mit einer Markierung versehen ist.

8. Fluggastsitz nach einem der Ansprüche 1 bis 7, **dadurch gekennzeichnet, daß** die Abdeckung (28) für die Schwimmweste (24) wiederverschließbar ist, insbesondere über Haftbandverschlüsse.

## Revendications

1. Siège de passager d'avion doté d'une possibilité de logement d'un gilet de sauvetage (24) et de parties rembourrées améliorant le confort du siège, où la possibilité de logement est formée au minimum d'une partie rembourrée (22) ainsi que d'un repose-jambes (18) doté d'une partie rembourrée (22), le gilet de sauvetage (24) étant entendu comme faisant partie intégrante d'une niche (26) dans chaque partie rembourrée (22), où le gilet de sauvetage (24) de l'utilisateur du siège est tourné vers celui-ci afin qu'il y accède, **caractérisé en ce que** le gilet de sauvetage (24) est intégré à la partie rembourrée (22) du repose-jambes (18) et **en ce que** le gilet de sauvetage (24) est compris sous la forme d'un coussin et est rassemblé dans la niche (26) de chaque partie rembourrée (22).

2. Siège de passager d'avion selon la revendication 1, **caractérisé en ce que** le gilet de sauvetage (24) est compris comme étant recouvert d'un couvercle (28) faisant partie intégrante de la partie rembourrée (22) ou est exempt de couvercle dans la partie rembourrée (22).

3. Siège de passager d'avion selon la revendication 1 ou 2, **caractérisé en ce que** le gilet de sauvetage (24), en raison de sa souplesse, assure au moins partiellement la propriété de rembourrage de la partie rembourrée (22) qui l'abrite.

4. Siège de passager d'avion selon la revendication 2, **caractérisé en ce que** le gilet de sauvetage (24) peut être pris seul ou avec sa housse dans la niche (26) de la partie rembourrée (22), qui pour cela reçoit essentiellement le gilet de sauvetage (24) conçu dans une forme rectangulaire s'y adaptant précisément.

5. Siège de passager d'avion selon l'une quelconque des revendications 2 à 4, **caractérisé en ce que** le couvercle (28) de la partie rembourrée (22) est doté d'une languette (30) permettant de l'ouvrir, et **en ce que** le couvercle (28) est fixé de façon géométriquement variable à l'autre partie rembourrée (22).

6. Siège de passager d'avion selon la revendication 5, **caractérisé en ce que** le repose-jambes (18) est au minimum partagé en deux par sa partie rembourrée (22), et le gilet de sauvetage (24) est placé dans la partie rembourrée (22), qui est appliquée ou non à l'extrémité vacante du repose-jambes (18) du siège.

7. Siège de passager d'avion selon l'une quelconque des revendications 2 à 6, **caractérisé en ce que** le couvercle (28) est, pour une meilleure identification du gilet de sauvetage (24), au moins partiellement transparent, ou doté d'un marquage.

8. Siège de passager d'avion selon l'une quelconque des revendications 1 à 7, **caractérisé en ce que** le couvercle (28) du gilet de sauvetage (24) est refermable, en particulier via des fermetures à ruban auto-agrippant.

## Claims

1. Plane passenger seat provided with a stowage compartment for a life jacket (24) and with upholstery elements improving sitting comfort, whereby the stowage compartment is formed by at least one upholstery element (22) and a leg support (18) with an upholstery element (22), **characterised in that** the life jacket (24) is accommodated as an integral part in the recess (26) of the respective upholstery element (22), whereby the life jacket (24) is facing in the direction of the user and is accessible to him, that the life jacket (24) is integral with the upholstery element (22) of the leg support (18) and the life jacket (24) is folded in the manner of a cushion and accommodated in the recess (26) of the respective upholstery element (22).

2. Plane passenger seat according to claim 1, **characterised in that** the life jacket (24) can be covered by the cover (28) as part of the upholstery element (22) or is accommodated in the upholstery element (22) without a cover.

3. Plane passenger seat according to claim 1 or 2, **characterised in that** thanks to its flexibility, the life jacket (24) guarantees at least partly the cushioning properties of the upholstery element (22) accommodating it.

4. Plane passenger seat according to claim 2, **characterised in that** the life jacket (24) alone or together with its protective sheath can be accommodated in the recess (26) in the upholstery element (22) which is essentially of a rectangular shape to accommodate accurately the life jacket (24).

5. Plane passenger seat according to one of the claims 2 to 4, **characterised in that** the cover (28) of the upholstery element (22) is provided with a pull tab (30) for opening it and the cover (28) is swivably connected with any other upholstery element (22).

6. Plane passenger seat according to claim 5, **characterised in that** the leg support (18) is in at least two parts due to its upholstery elements (22) and the life jacket (24) is arranged in the upholstery element (22) which is facing in the direction of the open end of the leg support (18) of the seat or away from it.

7. Plane passenger seat according to one of the claims 2 to 6, **characterised in that** the cover (28) is at least partly transparent or provided with markings for better identification of the life jacket (24).

8. Plane passenger seat according to one of the claims 1 to 7, **characterised in that** the cover (28) for the life jacket (24) is re-closeable, particularly by means of adhesive strip closures.
